# EUROPÄISCHE PATENTANMELDUNG

(11) **EP 1 160 001 A1**
(43) Veröffentlichungstag der Anmeldung: **05.12.2001**
(21) Anmeldenummer: 00810680.9
(22) Anmeldetag: 28.07.2000
(51) Int. Cl.: B01D 53/22

(54) **Verfahren und Vorrichtung zum Komprimieren eines Fluides enthaltend Ethylen und Stickstoff**

(30) Priorität: 31.05.2000 EP 00810483
(71) Anmelder: Riatti, Alberto, 61381 Friedrichsdorf (DE)
(72) Erfinder: Riatti, Alberto, 61381 Friedrichsdorf (DE)
(74) Vertreter: Graf, Werner

(57) **Zusammenfassung**

Das Verfahren zum Komprimieren eines Fluides enthaltend zumindest Ethylen und Stickstoff, ist dadurch gekennzeichnet, dass das Fluid mit einem Flüssigkeitsringkompressor komprimiert wird.

## Beschreibung

Die Erfindung betrifft ein Verfahren zum Komprimieren eines Fluides enthaltend Ethylen und Stickstoff gemäss dem Oberbegriff von Anspruch 1. Die Erfindung betrifft weiter eine Vorrichtung zum Komprimieren eines Fluides enthaltend Ethylen und Stickstoff gemäss dem Oberbegriff von Anspruch 7.

Ein Fluid enthaltend Ethylen und Stickstoff fällt beispielsweise bei der Herstellung von Polyethylen an. Polyethylen wird bekanntlich durch Polymerisation von Ethylen hergestellt. Nach dem Herstellen von Polyethylen muss dieses einem Reinigungsprozess unterzogen werden. Rohes Polyethylen enthält einen signifikanten Anteil an nicht reagierten Kohlenwassenstoffen. Bevor das rohe Polyethylen extrudiert wird, müssen die nicht reagierten Kohlenwasserstoffe entzogen werden. Diese Kohlenwasserstoffe werden in einer Stripping-Kolonne unter Verwendung von Stickstoff abgezogen. Das abgezogene Fluid enthaltend Ethylen und Stickstoff wird nachfolgend verdichtet. Es ist bekannt zum Verdichten dieses Fluides Kolbenkompressoren zu verwenden. Nachteilig an der Verwendung von Kolbenkompressoren ist die Tatsache, dass das im Fluid enthaltene Ethylen beim Komprimieren teilweise polymerisiert. Weiter nachteilig ist die Tatsache, dass das Fluid nur auf einen relativ geringen Druck komprimierbar ist.

Es ist Aufgabe der vorliegenden Erfindung ein wirtschaftlich vorteilhafteres Verfahren bzw. eine entsprechende Vorrichtung zum Komprimieren eines Fluides enthaltend Ethylen und Stickstoff vorzuschlagen.

Diese Aufgabe wird gelöst mit einem Verfahren aufweisend die Merkmale von Anspruch 1. Die Unteransprüche 2 bis 6 betreffen weitere, vorteilhafte Verfahrensschritte. Die Aufgabe wird weiter gelöst mit einer Vorrichtung aufweisend die Merkmale von Anspruch 7. Die Unteransprüche 8 und 9 betreffen weitere, vorteilhafte Ausgestaltungen.

Die Aufgabe wird insbesondere gelöst mit einem Verfahren zum Komprimieren eines Fluides enthaltend zumindest Ethylen und Stickstoff, indem das Fluid mit einem Flüssigkeitsringkompressor komprimiert wird.

Die Aufgabe wird zudem insbesondere gelöst mit einer Vorrichtung zum Komprimieren eines Fluides enthaltend zumindest Ethylen und Stickstoff, wobei diese Vorrichtung einen Flüssigkeitsringkompressor umfasst.

In der Stripping-Kolonne wird das abgetrennte Ethylen zusammen mit dem Stickstoff, und gegebenenfalls noch mit weiteren Kohlenwasserstoffen, Polyethylenstaub und Katalysatoranteilen, als Fluid bzw. Gasgemisch abgezogen, danach durch den Kompressor verdichtet, und danach einer Membran zugeführt. Zum Verdichten wird ein Flüssigkeitsringkompressor verwendet, welcher vorzugsweise mit Wasser betrieben wird, und welcher das Fluid auf einen Druck von beispielsweise 10 bar bis 15 bar verdichtet. Ein derartiger Flüssigkeitsringkompressor verdichtet das Gasgemisch nahezu isotherm, was den Vorteil aufweist, dass die Temperatur des Gasgemisches auf Grund der Kompression nicht oder kaum erhöht wird. Würde bei der Kompression eine wesentliche Temperaturerhöhung auftreten, so besteht die Gefahr, dass das im Gasgemisch enthaltene Etylen polymerisiert. Ein Flüssigkeitsringkompressor weist zudem den Vorteil auf, dass sowohl feste Anteile wie Polyethylenstaub als auch flüssige Anteile wie der Katalysator, welche aus der Stripping-Kolonne mitgerissen werden, mit dem Wassersystem des Flüssigkeitsringkompressors ausgeschleust werden können. Im Flüssigkeitsringkompressor erfolgt somit ein Waschen des geförderten Fluides, wobei insbesondere der im Fluid enthaltene Polyethylenstaub ausgewaschen wird, im Wasser verbleibt, und beispielsweise im einem Dekanter abgezogen werden kann. Ein Flüssigkeitsringkompressor weist zudem den Vorteil auf, dass die Katalysatoranteile durch das Wasser ausgewaschen werden. Bei der Herstellung von Polyethylen wird als Katalysator häufig Hexan verwendet, ein Krebs erzeugendes Mittel. Dieses Hexan kann somit der Stripping-Kolonne zumindest teilweise entzogen werden, sodass das hergestellte Polyethylen einen geringen Anteil Hexan aufweist.

Das verdichtete Ethylen -Kohlenwasserstoffgas-Stickstoffgemisch, das sich im Flüssigkeitsringkompressor mit Wasserdampf sättigt, wird einer organophilen Membranfläche zugeführt, welche das Ethylen und die Kohlenwasserstoffe als Permeat passieren lässt, wogegen Wasserdampf und Stickstoff als Retentat zurückgehalten wird. Der Stickstoff kann zusammen mit dem Wasserdampf der Stripping-Kolonne wieder zugeführt werden. Der Stripping-Vorgang erfolgt mit dem Stickstoff/Wasserdampfgemisch, wobei das zurückgeführte Stickstoff/Wasserdampfgemisch nach der Membran vorzugsweise durch einen Aktivkohlefilter geleitet wird, um den Rest des krebserzeugenden Hexans auf eine vertretbare Konzentration zu reduzieren. Ein Vorteil ist somit die Tatsache, dass der allgemeine Stickstoffverbrauch auf ein Minimum reduziert wird.

Der durch den Kompressor bewirkte, relativ hohe Druck von beispielsweise 10 bis 15 bar weist den Vorteil auf, dass die nachfolgend angeordnete Membran eine kleine Fläche aufweisen kann, und dass die Membran eine höhere Permeabilität aufweist, sodass die Membranvorrichtung relativ klein ausgestaltet sein kann. Trotz des hohen Druckes tritt am Flüssigkeitsringkompressor keine Polymerisation auf, da die Kompression im wesentlichen isotherm erfolgt. Das in der erfindungsgemässen Vorrichtung geförderte Fluid muss weder stark erwärmt noch stark abgekühlt werden, sodass das geförderte Fluid weder eine besonders hohe noch eine besonders tiefe Temperatur aufweisen. Insbesondere tritt auch keine Verflüssigung von Bestandteilen des Fluides auf. Dieser Aspekt ist insbesondere für die Lebensdauer der Membran von Wichtigkeit, da die Membran an sich temperaturempfindlich ist. Ein weiterer Vorteil der erfindungsgemässen Vorrichtung ist die Tatsache, dass auf Grund des relativ hohen Drucks, die Anlage sehr klein und kompakt ausgestaltet und dimensioniert werden kann.

Der Flüssigkeitsringkompressor ist beispielsweise wie in der Druckschrift EP 0 967 393 A2 offenbart ausgestaltet.

Die Erfindung wird nachfolgend an Hand von Ausführungsbeispielen beschrieben.
- Fig. 1: zeigt schematisch eine Vorrichtung zur Rückgewinnung von Stickstoff bei der Herstellung von Polyethlyen;
- Fig. 2: zeigt schematisch eine weitere Vorrichtung zur Rückgewinnung von Stickstoff bei der Herstellung von Polyethylen;
- Fig. 3: zeigt einen Querschnitt durch einen in der Druckschrift EP 0 967 393 offenbarten Flüssigkeitsringkompressor.

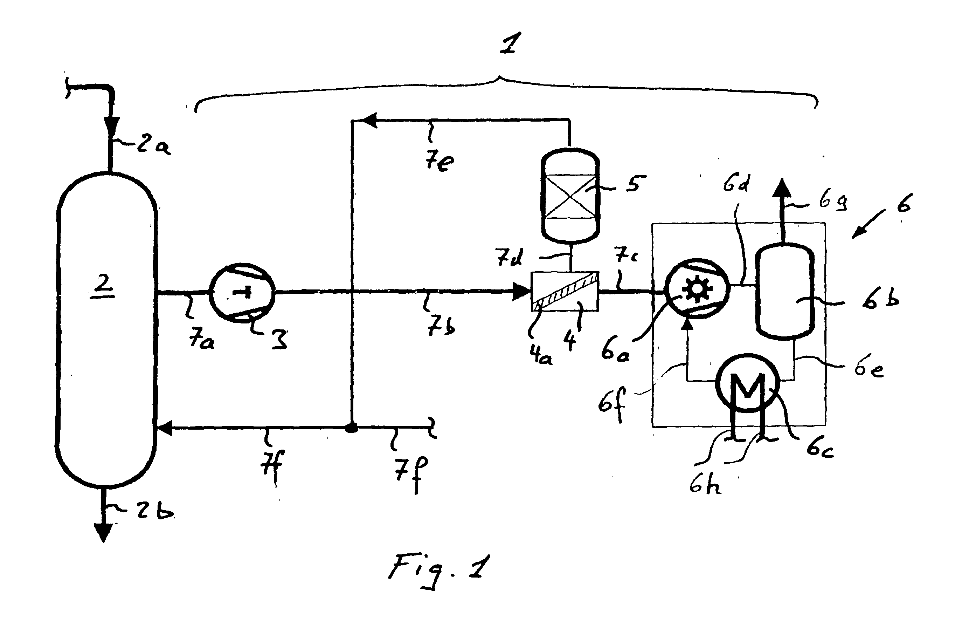

Fig. 1 zeigt eine erste Vorrichtung, welche einen Flüssigkeitsringkompressor zum Erzeugen eines Vakuums umfasst. In einem nicht dargestellten Reaktor wird das Ethylen zu rohem Polyethylen polymerisiert. Dem Reaktor nachfolgend ist eine Stripping-Kolonne 2 angeordnet, welche über die Zuleitung 2a Fluid leitend mit dem Reaktor verbunden ist. Innerhalb der Stripping-Kolonne 2 wird das rohe Polyethylen mit einem an sich bekannten Verfahren gereinigt, indem dem rohen Polyethylen unter Verwendung von Stickstoff die nicht reagierten Kohlenwasserstoffe entzogen werden. Das derart gereinigte Polyethylen wird über die Ableitung 2b einer weiteren Verarbeitung zugeführt.

Die Stripping-Kolonne 2 ist Fluid leitend mit einer Stickstoffrückgewinnungsvorrichtung 1 verbunden. Eine Membranvorrichtung 4 mit Membran 4a ist über eine Zuleitung 7b, einen ölfreien Kompressor 3 und eine Zuleitung 7a Fluid leitend mit der Stripping-Kolonne 2 verbunden. Der Kompressor 3 ist beispielsweise als Labyrinth-Kolbenkompressor ausgestaltet. Der Membranvorrichtung 4 ist über eine Verbindungsleitung 7d ein Filter 5 nachgeordnet, wobei das Filter 5 über die Verbindungsleitungen 7e, 7f Fluid leitend mit der Stripping-Kolonne 2 verbunden ist. Die Membranvorrichtung 4 ist über die Verbindungsleitung 7c zudem mit einem Vakuumpumpsystem 6 verbunden. Das Vakuumpumpsystem 6 umfasst eine Flüssigkeitsringpumpe 6a, welche, unter Ausbildung eines Flüssigkeitskreislaufes, über die Verbindungsleitungen 6d, 6e, 6f Fluid leitend mit einem Separator 6b, auch als Gas-Flüssigkeitsabscheider bezeichnet, sowie einem Kühler 6c mit Kühlleiter 6h verbunden ist. Die Flüssigkeitsringpumpe 6a ist derart angeordnet, dass sie bezüglich der Membranvorrichtung 4 ein Vakuum erzeugt. Nebst anderen Flüssigkeiten ist zur Verwendung im Flüssigkeitskreislauf insbesondere Wasser geeignet. Im Separator 6b werden die flüssigen und gasförmigen Bestandteile getrennt, wobei die gasförmigen Anteile über die Ableitung 6g abgeführt werden, beispielsweise an einen Flare. Im dargestellten Ausführungsbeispiel wird in der Stripping-Kolonne 2 zwischen 700 und 1500 kg Stickstoff (N₂) pro Stunde umgesetzt.

Das Gasgemisch umfassend Ethylen und Stickstoff wird mit Hilfe des Kompressors 3 aus der Stripping-Kolonne 2 abgezogen und der Membranvorrichtung 4 zugeführt. Die Membran 4a hat die Eigenschaft, dass sie für Kohlenwasserstoffe wesentlich durchlässiger ist als für Stickstoff. Die Kohlenwasserstoffe, insbesondere das Ethylen, wird über die Verbindungsleitung 7c abgesaugt, wogegen der mit Ethylen abgereicherte Stickstoff im Filter 5 mit Aktivekohle gefiltert wird, und danach gereinigt der Stripping-Kolonne 2 zugeführt wird. Der derart gereinigte Stickstoff kann beispielsweise eine Reinheit von 99,5%-aufweisen. Die Membran 4a kann beispielsweise aus einem Mehrschichtverbundwerkstoff bestehen, im Englischen auch als "Multilayer Composite Membrane" bezeichnet. Eine derartige Dünnfilm-Membran weist beispielsweise eine 10 bis 100 mal höhere Permeabilität für Kohlenwasserstoffe im Vergleich zu Stickstoff auf.

Das von der Membranvorrichtung 4 mit Hilfe der Flüssigkeitsringpumpe 6a abgezogene Ethylen wird im Separator 6b von der Flüssigkeit getrennt und der Ableitung 6g zugeführt. Das derart abgezogene Ethylen kann verbrannt werden, oder einer nachfolgenden Verarbeitung zugeführt werden. Das abgezogene Ethylen kann auch wieder zur Herstellung von Polyethylen verwendet werden, indem das Polyethylen beispielsweise dem Reaktor zugeführt wird.

Über die Verbindungsleitung 7f kann zusätzlicher Stickstoff zugeführt werden, um den im Rückgewinnungsverfahren auftretenden Verlust zu kompensieren.

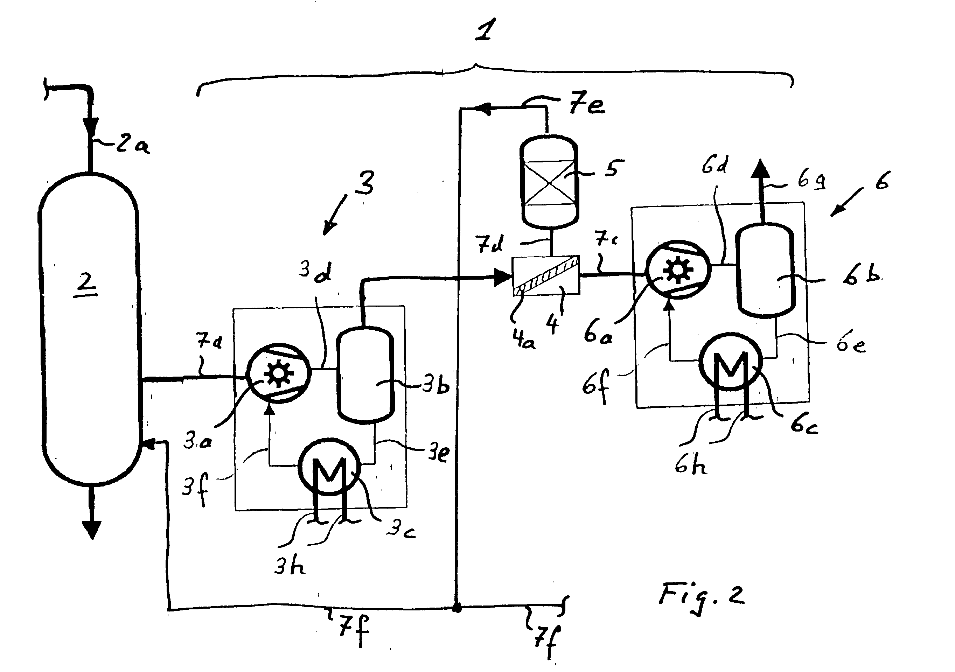

Im Unterschied zu dem in Fig. 1 dargestellten Ausführungsbeispiel ist in Fig. 2 auch der Kompressor 3 als ein Flüssigkeitsringkompressorsystem 3 ausgestaltet, umfassend einen Flüssigkeitsringkompressor 3a, einen Separator 3b und einen Kühler 3c, wobei die drei letztgenannten Komponenten über Verbindungsleitungen 3d, 3e, 3f, und unter Ausbildung eines Kreislaufes, Fluid leitend verbunden sind. Der Kühler 3c ist zudem mit einer Kühlleitung 3h verbunden. In diesem Kreislauf wird als Förderflüssigkeit vorzugsweise Wasser verwendet.

Das in Fig. 2 dargestellte Ausführungsbeispiel weist den Vorteil auf, dass das aus der Stripping-Kolonne 2 über die Verbindungsleitung 7a abgezogene Fluid isotherm oder nahezu isotherm komprimiert wird. Zudem wird das abgezogene Fluid im Flüssigkeitsringkompressor 3a gewaschen und beispielsweise Polyethylenstaub und Katalysatoranteile dem Fluid über einen nicht dargestellten Dekanter entzogen.

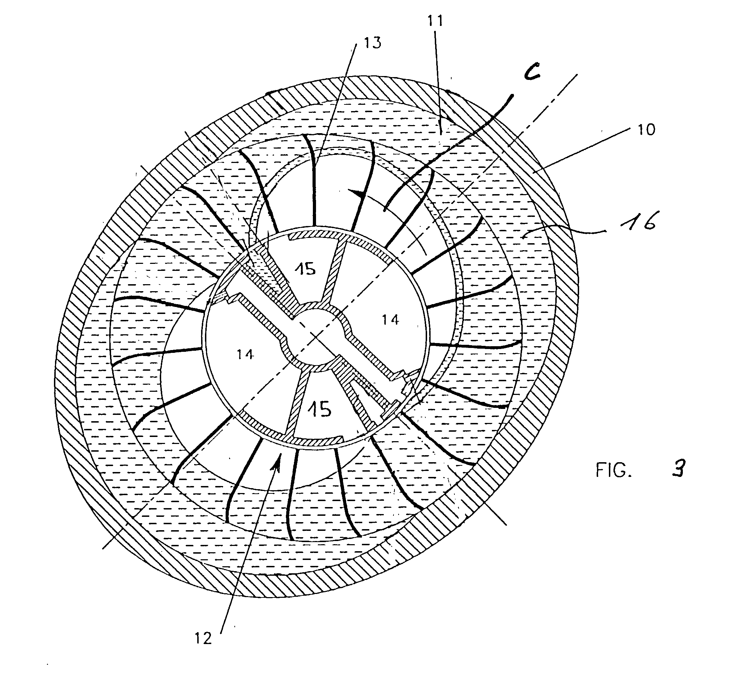

In Figur 3 ist ein Querschnitt durch das Gehäuse 10 eines bekannten Flüssigkeitsringkompressors 1 dargestellt, welches im Inneren einen ovalen Raum 11 aufweist, in welchem sich ein Schaufelrad 12 befindet, das bezüglich dem Gehäuse 10 koaxial angeordnet ist und in Drehrichtung C drehbar gelagert ist.

Das Schaufelrad 12 ist mit einer Vielzahl von Schaufeln 13 bestückt, deren Enden einen Kreis beschreiben. Die Schaufeln 13 sind zumindest teilweise von einem Fluid 16, insbesondere Wasser umgeben. Im Inneren des Schaufelrads 12 ist ein Verteiler angeordnet, in dem ein Paar Eintrittskanäle 14 und ein Paar Austrittskanäle 15 angeordnet sind. Der Gaseinlass der ersten Stufe umfasst die beiden Kanäle 14 während die Kanäle 15 die Gasausgangskanäle der ersten Stufe bilden. Weitere Details sind in der Druckschrift EP 0 967 393 A2 offenbart.

Die in Fig. 1 und Fig. 2 dargestellten Verfahren und Vorrichtungen sind nur als Ausführungsbeispiele zu verstehen. Das erfindungsgemässe Verfahren zum Komprimieren eines Fluides enthaltend zumindest Ethylen und Stickstoff unter Verwendung eines Flüssigkeitsringkompressors kann natürlich auch in anderen Verfahren verwendet werden.

## Patentansprüche

1. Verfahren zum Komprimieren eines Fluides enthaltend zumindest Ethylen und Stickstoff, **dadurch gekennzeichnet, dass** das Fluid mit einem Flüssigkeitsringkompressor komprimiert wird.

2. Verfahren nach Anspruch 1, **dadurch gekennzeichnet, dass** das Fluid isotherm oder im wesentlichen isotherm komprimiert wird.

3. Verfahren nach Anspruch 1 oder 2, **dadurch gekennzeichnet, dass** das Fluid zudem mit der Ringkompressorflüssigkeit gewaschen wird.

4. Verfahren nach Anspruch 3, **dadurch gekennzeichnet ,dass** Bestandteile des Fluides wie Polyethylenstaub, oder ein Katalysatormittel wie Hexan, mit der Ringkompressorflüssigkeit ausgewaschen werden, und dadurch dem Fluid entzogen werden.

5. Verfahren nach einem der vorhergehenden Ansprüche, **dadurch gekennzeichnet, dass** die Ringkompressorflüssigkeit zumindest Wasser umfasst.

6. Verfahren nach einem der vorhergehenden Ansprüche, **dadurch gekennzeichnet, dass** das Fluid auf einen Druck zwischen 10 und 15 Bar komprimiert wird.

7. Vorrichtung (3) zum Komprimieren eines Fluides enthaltend zumindest Ethylen und Stickstoff, **dadurch gekennzeichnet, dass** diese Vorrichtung (3) einen Flüssigkeitsringkompressor (3a) umfasst.

8. Vorrichtung nach Anspruch 7, **dadurch gekennzeichnet, dass** der Flüssigkeitsringkompressor (3a) über eine Verbindungsleitung (3d) Fluid leitend mit einem Separator (3b) verbunden ist, und dass der Separator (3b) über Verbindungsleitungen (3e, 3f) mit einem Kühler (3c) und nachfolgend mit dem Flüssigkeitsringkompressor (3a) Fluid leitend verbunden ist.

9. Vorrichtung nach einem der Ansprüche 7 oder 8, **dadurch gekennzeichnet, dass** der Flüssigkeitsringkompressor (3a) Fluid leitend mit einer Stripping-Kolonne (2) und einer Membranvorrichtung (4) verbunden ist, und dass der Flüssigkeitsringkompressor (3a) zwischen der Stripping-Kolonne (2) und der Membranvorrichtung (4) angeordnet ist.

10. Verwendung eines Flüssigkeitsringkompressors (3a) zum Komprimieren eines Fluides, insbesondere eines Gasgemisches, enthaltend zumindest Ethylen und Stickstoff.
